# EUROPEAN PATENT SPECIFICATION

(11) **EP 2 863 142 B1**
(45) Date of publication and mention of the grant of the patent: **10.04.2019**
(21) Application number: 14189811.4
(22) Date of filing: 21.10.2014
(51) Int. Cl.: A47J 33/00, A47J 37/07, F24H 9/02, F24H 3/00, F17C 13/08, F24C 3/14, F17C 13/00

(54) **Housing for portable gas heater**
Gehäuse für eine tragbare Gasheizung
Boîtier de chauffage à gaz portable

(30) Priority: 21.10.2013 GB 201318534
(43) Date of publication of application: 22.04.2015
(73) Proprietor: O'Connell, Joseph, Wicklow (IE); O'Connell, Stewart, Bray, Wicklow (IE)
(72) Inventor: O'Connell, Joseph, Wicklow (IE); O'Connell, Stewart, Bray, Wicklow (IE)
(74) Representative: Hanna Moore + Curley

(56) References cited:
- DE-A1- 2 359 380
- GB-A- 2 199 403
- US-A- 3 858 600
- US-A- 4 802 515

## Description

### Field

The present teaching relates to gas fuelled devices such as heaters, barbecues and the like. The present teaching particularly relates to a mating arrangement between a regulator for a portable gas fuelled device, and the valve on a gas cylinder.

### Background

Gas fuelled devices such as heaters and barbecues are well known. In the context of a gas heater they are used as a space heater to heat a room or outdoor area by burning natural gas, liquefied petroleum gas, propane or butane. Space heaters have been used for many years to heat outdoor locations such as patios at restaurants, outdoor recreational facilities, garages, home patios, and other areas. Traditional space heater designs have tended to be somewhat large and bulky, and are not particularly convenient for many home uses. Indoor gas heaters are also well known. These vary from those heaters that are powered off a mains or central gas supply such as a gas space heater which operates like a central heating system or coal effect gas heaters which fit into a traditional fireplace and are becoming more and more common as replacements for the real coal fire.

Gas heaters can be broadly classified into two general types. The first type is a permanent installation where the fire housing of the gas fire is installed permanently at a fixed location within the domestic dwelling. These types of permanent arrangements are typically used to replace the classic hearth arrangement and are often fuelled directly from a mains gas supply.

The second arrangement is a portable heater which can be transported by the user around the domestic dwelling to provide space heating in desired locations. These are typically standalone and are provided with a dedicated bottle gas supply that is typically located within an interior portion of the housing. Existing portable gas heating appliances typically comprise a box-like cabinet within which a bottle of pressurised gas such as a gas cylinder is located. The cylinder is connected to a gas supply regulator via a valve on a top of the cylinder. The gas heating appliance further comprises gas feed controls, an igniter and one or more gas burners within the cabinet. The gas supply regulator, gas feed controls, igniter and gas burner(s) form a so-called "heat engine".

Similarly a portable gas barbecue uses a gas cylinder or bottle to provide fuel for the operation of the barbecue.

One common disadvantage for these portable gas fuelled devices is the manner in which the fuel source is incorporated within the device. Many of the known portable devices do not have an easy and convenient system by which the fuel source can be replaced. Typically, the bottle gas supply is in the form of a gas cylinder which may be considerably heavier than the housing. This may be inconvenient for a user of the appliance when changing the cylinder. Also, the housing may have an opening with doors and/or hinges to facilitate the insertion of the gas cylinder inside the housing. The insertion of the gas cylinder may not be a straightforward operation. Attachment of the regulator to the cylinder must also be performed by the user when replacing the cylinder. The regulator is set by the manufacturer to control the pressure of the supply. This operation may also not be straightforward.

Patent document US 3858600 describes an apparatus consisting of a casing for attachment to a frame element of the stove, conventional means for tapping gas from the cartridge, a sleeve extending over the casing, a series of radial grippers rigidly connected to the frontal end of the sleeve and adapted to the bead of the cartridge mouth, and axial thrust means for mounting the cartridge to the grippers. The sleeve is mobile on the casing and subject to the return action of the axial thrust means toward a position of engagement of the grippers on the cartridge bead. US 3858600 discloses the preamble of claim 1.

Patent document US 4802515 describes a safety gas and liquid containment unit provided with sealing for retaining the hazardous gas therein until treated. The containment unit can be placed on a transport carrier and rotated from a vertical position to a horizontal position thereon. The gas cylinder may be brought to the containment unit by placing it on a wheeled cart. By aligning the cart with the horizontally positioned containment unit, the container is then transferred from the cart to the containment unit, which can in turn be transported to an appropriate area for treatment. Upon removal of the toxic or other gases, the container can be withdrawn from the containment unit by a winch mechanism.

Patent document GB 2199403 describes a casing for a gas-fired space heater comprises a main frame which is detachably attachable to a heat engine which includes the controls, regulator and burners. A base on which a gas bottle can be mounted, extends rearwardly of the main frame and at least one shaped closure member can be located to cover the bottle, or moved to allow the bottle to be moved vertically both for removal and installation. Thus the bottle can be more easily installed or removed and by virtue of the casing being detachable from the heat engine, the casing and bottle can be more easily transported when required, than the bottle by itself.

There are therefore a number of problems with such arrangements in portable gas fuelled devices. It is an object of the present teaching to address and overcome these problems.

### Summary

Accordingly, a first embodiment of the application provides a portable gas cylinder housing, the housing comprising a built-in regulator being moveable so as to effect a positive operable coupling of the regulator with a gas cylinder received within the gas cylinder housing, and characterised in that the cylinder housing comprises a guide for orientating and receiving the gas cylinder within the gas cylinder housing, the guide being configured to cooperate with a valve on the received gas cylinder to locate the valve relative to the built-in regulator and the built-in regulator is provided in an integrated regulator housing, the regulator housing being accessible to a user through an outer surface of the cylinder housing, the regulator housing being spring-mounted and moveable relative to the cylinder housing, a movement of the regulator housing effecting a corresponding movement of the regulator into contact with the received gas cylinder

In a particular case, the regulator housing comprises spring-loaded housing mounts which are slideably guided in the regulator housing, wherein the housing mounts are spring-biased outwardly.

In another particular case, the housing defines an area in a top portion of the housing for receiving the regulator housing.

In a further particular case, the housing defines a recess in an inner surface of the top portion of the housing, the recess configured for receiving a shroud of the gas cylinder.

In yet another particular case, the regulator housing is configured for engagement and disengagement with a valve on the gas cylinder, the regulator housing being configured to positively engage with the valve of the cylinder by actuating the regulator housing in a first direction.

In a further particular case, the regulator housing is moveable in a first direction and comprises an integrated on/off lever for opening/closing the regulator by actuating the on/off lever in a second direction.

In another particular case, the housing comprises one or more securing brackets in the housing for gripping onto a received gas cylinder.

In another particular case, the housing comprises an integrated heat engine comprising: at least one gas burner, the regulator housing, and an ignition and heat setting unit.

In yet another particular case, the housing further comprises a base unit configured for receiving a gas cylinder, wherein the base unit is configured to locate the gas cylinder relative to the regulator housing such that on receipt of the gas cylinder within the housing, the cylinder is aligned with the regulator housing.

According to another aspect, there is provided a portable gas heater comprising the housing as described above and a gas cylinder.

According to yet another aspect, there is provided a portable gas barbecue comprising the housing as described above and a gas cylinder.

These and other features of the present teaching will be better understood with reference to the drawings which follow, which are provided to assist in an understanding of the present teaching but not to be construed as limiting in any fashion.

### Brief Description Of The Drawings

The present application will now be described with reference to the accompanying drawings in which:
Figures 1 illustrates a perspective view of a housing for a portable gas heater in accordance with an embodiment of the present teaching;
Figure 2 illustrates a perspective view of a housing for a portable gas heater in accordance with an embodiment of the present teaching, the housing including a main housing unit and a base unit;
Figure 3 is a perspective view of a top portion of the main housing unit, according to an embodiment of the present teaching;
Figure 4 is a perspective view of the top portion of the main housing unit, including a perforated mesh cover, according to an embodiment of the present teaching;
Figure 5 is a perspective view of the main housing unit alongside a gas cylinder;
Figure 6 is a view of the heat engine of the gas heater housing according to an embodiment of the present teaching; and
Figure 7 is a view illustrating the interconnection between a regulator housing including a built-in regulator, and a gas cylinder, according to an embodiment of the present teaching.

### Detailed Description Of The Drawings

The present teaching will now be described with reference to the following figures.

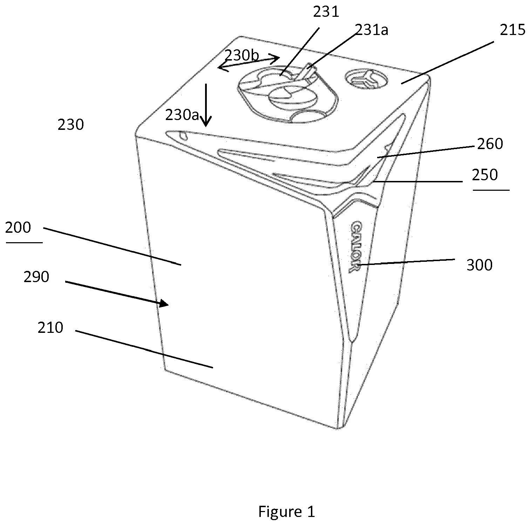

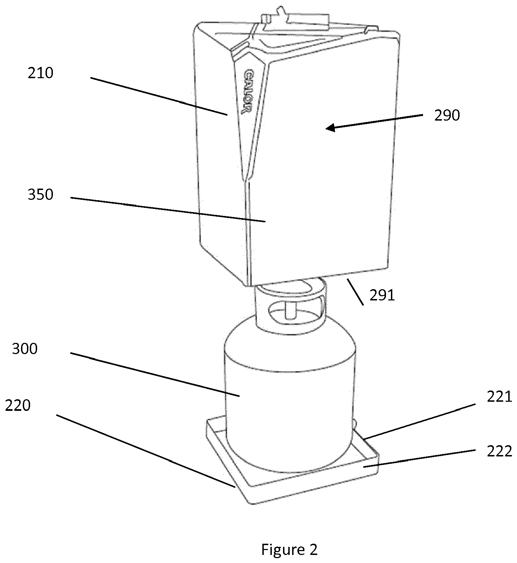

Figures 1 and 2 illustrate a perspective view of a housing 200 for a portable gas heater in accordance with an embodiment of the present teaching. For the following description the portable gas fuelled device will be described with reference to a gas heater but it will be appreciated that the present teaching is not intended to be limited to such specific types of gas fuelled devices. Referring to Figure 1, the housing 200 may define an inner space or volume 290 dimensioned in accordance with the volume of a gas cylinder 300. The gas cylinder 300 may be provided in the form of a bottle and is used for storing pressurised gas. For example, the gas cylinder 300 may be one of a plurality of types of gas cylinders known to persons skilled in the art, such as those provided by Calor™. Referring to Figure 2, the housing 200 may include a base unit 220 configured for receiving the gas cylinder 300. On receipt the gas cylinder is seated upon the base unit 220. The base unit 220 includes a floor 221 on which the cylinder 300 is located. A lip 222 extends about and is upstanding from the floor 221. This serves to define side walls of the base unit 220. The housing 200 further comprises a main housing unit 210 defining an inner volume 290 corresponding in dimension to that of the gas cylinder 300. The main housing unit 210 comprises a mouth 291 providing access to the inner volume. In use and as shown in Figure 2, the gas cylinder 300 is placed onto the base unit 220 and the mouth 291 of the main housing unit 210 is passed over the located gas cylinder 300. The main housing unit 210 is then moved downwardly over the cylinder 300 until the mouth 291 is coincident with the base. The main housing unit 210 may be dimensioned to have a larger area than that of the base unit 220 such that side walls of the main housing unit 210 may pass over the side walls or lip 222 of the base unit 220, such as shown in Figure 1. The main housing unit 210 may be coupled to the base unit 220 through a physical coupling. Other configurations may rely on the interference fit provided by the abutment of the side walls with the lip 222. Further configurations may simply rely on the weight of the main housing unit 210 to provide the securement of location.

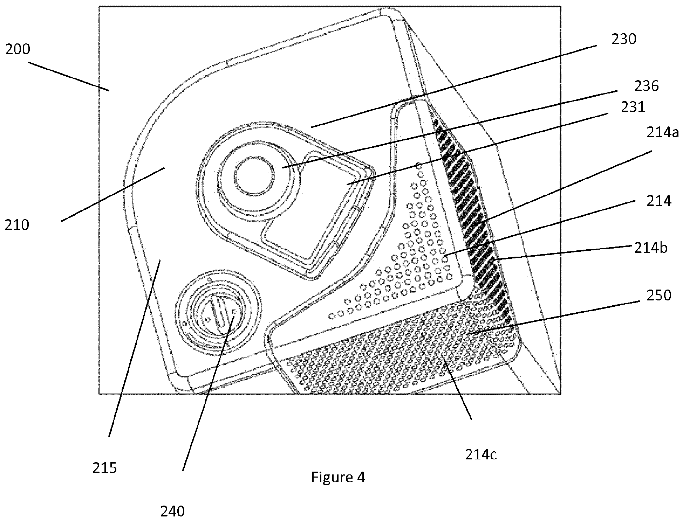

As is detailed above the main housing unit 210 is configured to fit over the top of a gas cylinder 300 and cooperates with the base unit 220 to define a complete housing 200. The housing 200 may be configured to fit gas cylinders of various sizes and shapes. For example, the housing 200 may be configured to receive the commonly used 4.5 kg butane gas cylinder, as illustrated in Figure 4.

The main housing unit 210 may be configured in a cuboid-like structure having four substantially planar sides, a top portion 215 and the mouth 291 in the form of an opening in a bottom portion for fitting over the gas cylinder 300. However, it will be appreciated by those skilled in the art that the housing 200 may have various different shapes such as a cylindrical shape as long as it can fit over a gas cylinder suitable for use in a home heating environment.

As mentioned above, the main housing unit 210 and the base unit 220 are desirably configured to be coupled to each other. In this regard, when the main housing unit 210 is fitted over the gas cylinder 300, distal end portions of the main housing unit 210 are configured to be coupled with the base unit 220. It will be understood by the skilled person that distal end portions of the main housing unit 210 refer to end portions at the open end or mouth 291 of the main housing unit 210. The coupling arrangement may be effected by the distal end portions of the main housing unit 210 contacting outer surfaces of protruding edges of the base unit 220. However, any suitable coupling arrangement may be applied such as a snap fit arrangement.

When a user first uses the heater or replaces an empty gas cylinder 300, the gas cylinder 300 may be positioned on the base unit 220 and the main housing unit 210 may be lowered over the gas cylinder 300. This minimises lifting of the gas cylinder 300 as the gas cylinder 300 will only need to be lifted onto the base unit 220.

The base unit 220 may be configured for accurately locating a base of a gas cylinder 300 during loading of the cylinder 300. It will be appreciated that the base unit 200 is configured to accurately position a gas cylinder 300 in the correct orientation for connection of a valve of the gas cylinder 300 to a gas regulator. A gas cylinder 300 may be located on the base unit 220 in one of a plurality of ways. For example, the base unit 220 may define at least a recess portion or a protruding portion for positioning the cylinder 300 on the base unit 220. The recess portion or protruding portion may define a circular area to correspond with the shape of a base of a typical gas cylinder. Referring to Figure 2, the base unit 220 may comprise a tray-like structure, with walls on all four sides corresponding to the sides of the main housing unit 210. In this manner, a gas cylinder 300 may be seated securely in place on the base unit 220. The one or more enclosing walls serve to retain the gas cylinder 300 on the base unit 220 in use. The base unit 220 may also comprise at least one castor or wheel, not shown, upon which the gas heater rests in use, and which enhances portability. The at least one castor or wheel may be releasably lockable, which assists in the loading of a gas cylinder 300 onto the base unit 220. The at least one castor or wheel may be provided on an opposite side of the base unit 220 to that which receives the gas cylinder 300. The base unit 220 may be circular in area to correspond with the shape of a base of a typical gas cylinder. However, the base unit is not limited to such a shape and may have a square or other shape to correspond to the shape of the main housing unit 210.

In other examples, the base unit 220 may comprise a recess in one edge which, when engaged by a gas cylinder, centres the gas cylinder 300 with respect to the base. The base unit 220 may define a generally lenticular recess, being part-circular and having a diameter which corresponds to that of a gas cylinder 300 for use with the appliance.

Referring to Figure 1, the main housing unit 210 may define an opening 250 in at least one side thereof. In one embodiment as illustrated in Figure 1, the opening 250 may extend along edges between top and side portions of the main housing unit 210. The housing 200 may include a convective heat engine comprising at least one gas-fired burner 260 disposed at a location corresponding to the opening 250. The gas-fired burner 260 may comprise any suitable burner such as a ribbon burner. The gas burner 260 may be of a conventional manufacture and is adapted to effect a mixing of the gas with air to provide a combustible mixture which, on ignition provides a flame which is distributed through the opening 250. The heat engine may include a fluid conduit that may be coupled to the gas cylinder 300. The fluid conduit provides a gas supply to the at least one gas burner 260 which may be located in the upper region of the housing 200. In use, the heat generated by the flame desirably is radiated outwardly to provide effective heating to the space in which the heater is located.

The gas-fired burner 260 may comprise a ribbon-type gas burner. Persons of skill in the art will appreciate that a ribbon-type gas burner typically has an elongated pre-mix casing into which is fed air and gas, and an outlet extending along a slot in the casing and projecting therefrom. The outlet may be provided with two sets of corrugated ribbons separated by a gas pressure chamber, whereby the air-gas mixture from the casing passes through one set into the chamber where the pressure thereof is equalized before the mixture passes through the other set from which it emerges as a sheet of flame of uniform intensity.

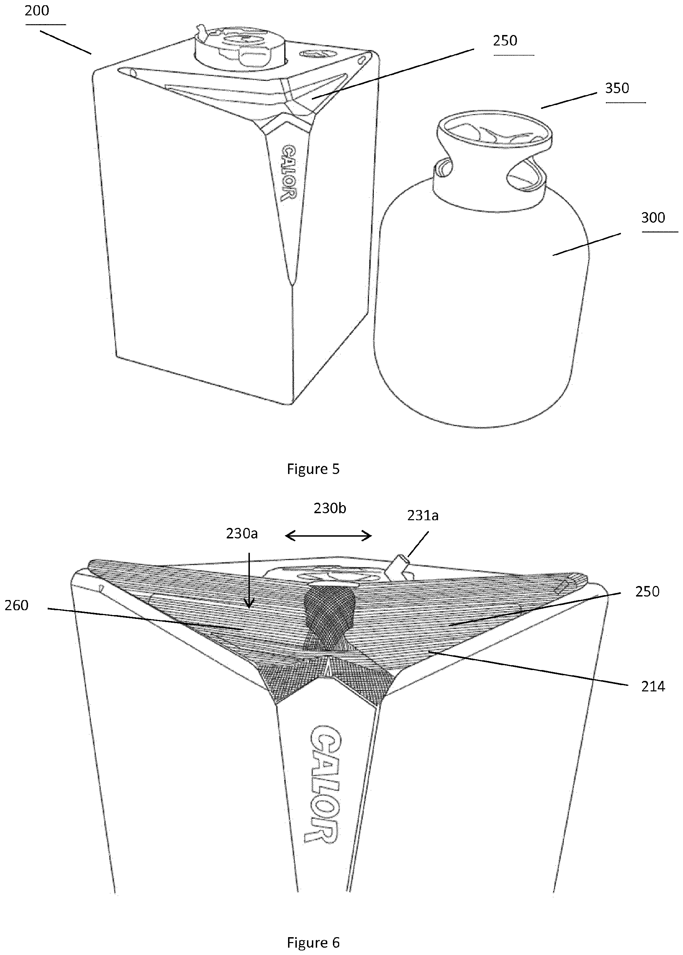

Referring to Figure 5, one or more gas burners 260 may be disposed to correspond to the opening 250. It will be appreciated that the heat engine may have any number of burners sufficient to provide effective heating. The burners 260 may be covered with a perforated mesh cover 214 such as a metal gauze, as illustrated in Figures 5 and 6. The perforated mesh cover 214 functions to prevent contact with the burners 260. Also, the perforated mesh cover 214 allows combustion products to escape freely from the heat engine. In addition, convective air currents pass upwardly where they pass through the perforated mesh cover 214 provided in the upper region of the heater. A catalytic converter (CAT) may be provided in the heat engine to ensure that before the convective air currents pass out of the heater, that the exhaust gases do not include levels of dangerous gases beyond what is permissible by safety standards.

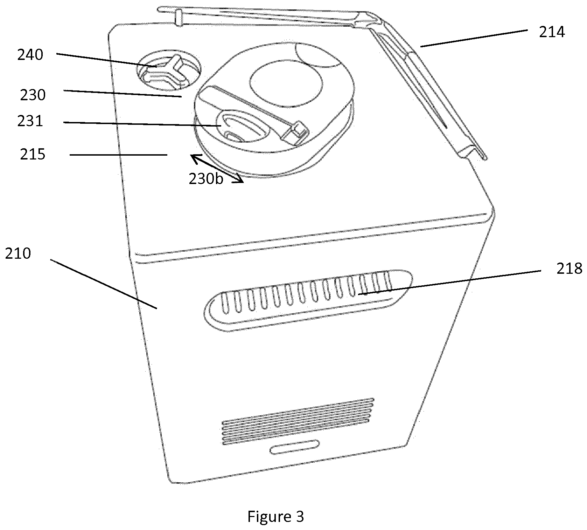

Referring to Figure 3, the perforated mesh cover 214 may have a shape corresponding generally to that of the opening 250 in the walls of the main housing unit 210. The perforated mesh cover 214 may be configured to extend along and be separated from the at least one gas burner 260 for a substantial portion of the frame 217. The perforated mesh cover 214 may be located immediately in front of the at least one gas burner 260, thereby acting as a draught guard. The perforated mesh cover 214 may be secured to the edges of the main housing unit 210 and extend over the opening 250. The at least one burner 260 and the perforated mesh cover 214 collectively are part of the convective heat engine. Referring to Figure 4, the perforated mesh cover 214 may be configured to form a corner portion of the main housing unit 210. The perforated mesh cover 214 may define perforations in top 214a and side portions 214a, 214b thereof. The perforated mesh cover 214 may be an integral portion of the main housing unit 210. Alternatively, the perforated mesh cover 214 may be a separate element to the main housing unit 210, as illustrated in Figure 4. Whether integrally or separately formed, the top 214a and side portions 214b, 214c may be configured to be coplanar with the respective top portion 215 and side portions of the main housing unit 210.

The perforated mesh cover 214 surrounding the primary aeration holes of the gas burners 260 may function as an effective means of preventing any flame from reaching the exterior of the appliance. Thus, the safety of the appliance as a whole may be significantly increased by virtue of the perforated mesh cover 214. It will also be appreciated that combustion air may also be drawn in through the apertures of the perforated mesh cover 214.

As illustrated in Figure 3, air inlets 218 for ventilation purposes may be provided in a recess in at least one side of the main housing unit 210. The recess may function as a handle for lifting the main housing unit 210 off the base unit 220 when replacing the gas cylinder 300. A similar recess with an air inlet may be provided on one more other sides of the main housing unit 210.

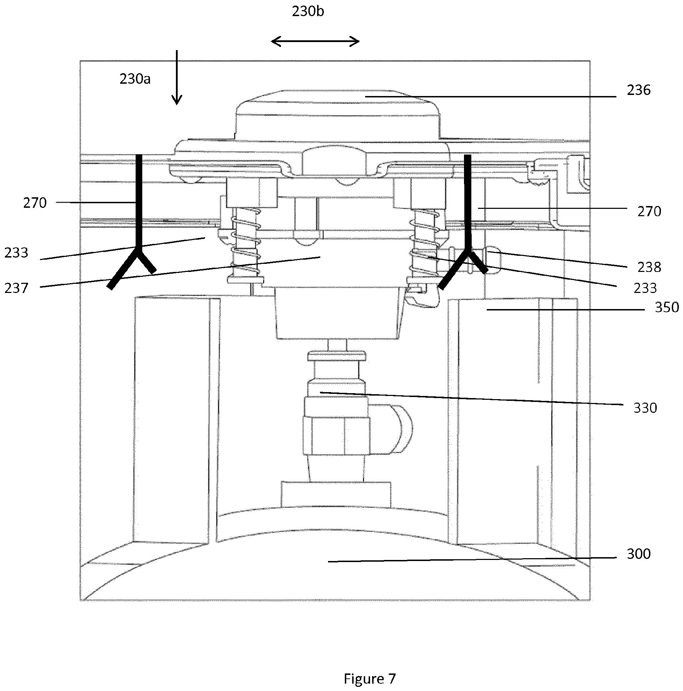

The present teaching also provides a housing for a portable gas cylinder such as those typically used for gas heaters or barbecues. The housing comprises an integrated regulator housing comprising a regulator, wherein the regulator housing is configured for coupling with a gas cylinder. Referring to Figures 2, 5, and in particular Figure 7, the housing 200 may be configured to integrate with a handle or shroud 350 of the gas cylinder 300. The shroud 350 is typically circular in shape. Referring to Figure 7, a valve 330 of the gas cylinder 300 is typically disposed within the circumference of the shroud 350. The housing 200 comprises an integrated regulator housing configured to be coupled with the valve 330 on the gas cylinder 300. The integrated regulator housing which includes a built-in regulator will be described below. The housing 200 may comprise a main housing unit 210 and a base unit 220. However, the present teaching is not limited thereto, and the housing 200 may be any suitable housing for a portable gas heater. The main housing unit 210 may define an inner volume corresponding to that of the gas cylinder 300. In one embodiment, the integrated regulator housing may be provided in the main housing unit 210. In this regard, the top portion 215 of the main housing unit 210 may define a recess in an inner surface of the top portion 215 for receiving the shroud 350 of the gas cylinder 300. Alternatively, as shown in Figure 7, one or more guides may be provided to align a received gas cylinder within the housing. As shown in Figure 7, these guides may be provided on the inner surface of the top portion 215 of the main housing unit 210 to receive the shroud 350 of the gas cylinder. The guides may be in the form of protrusions. Referring to Figure 7, the guides may comprise one or more brackets 270 which extend from the inner surface of the top portion 215 of the main housing unit 210. It will be appreciated that the alignment of the gas cylinder 300 on the base unit 220 may also serve to align the regulator with the gas cylinder 300. In this way, it will be appreciated that in another configuration, one or more guides may be provided which cooperate with the valve of the gas cylinder to locate the valve relative to the regulator. By guiding the valve as opposed to the actual body of the cylinder a more accurate alignment may be achieved.

The base unit 220 may be configured that when a gas cylinder 300 is seated in place on the base unit 220 and the main housing unit 210 is fitted over the gas cylinder 300 to couple with the base unit 220, the main housing unit 210 is disposed to correspond to the shroud 350.

Figures 3 and 4 are a perspective views illustrating the top portion 215 of the main housing unit 210, according to an embodiment of the present teaching. Referring to Figure 3, the top portion 215 of the main housing unit 210 may define an area in which an integrated regulator housing 230 is received. Thus, the regulator housing 230 is accessible for the user on an outer surface of the housing 200. With the regulator housing 230 disposed in the top portion 215, a recess for receiving the shroud 350 of the gas cylinder 300 may be defined in an inner surface of the top portion 215 of the main housing unit 230. The regulator housing 230 may be configured to be aligned with the valve on a gas cylinder 300. The regulator housing 230 is configured to be coupled and decoupled to and from a gas cylinder 300 in the inner volume of the main housing unit 210. Insofar as the mating arrangement may be used with different gas cylinders it is also desirable that the regulator housing 230 may be coupled to a number of different cylinder types and will provide the same gas pressure feed to the burner 260 irrespective of the gas pressure within the cylinder.

Figure 7 is a view illustrating the interconnection between the regulator housing 230 and a gas cylinder, according to an embodiment of the present teaching. The regulator housing 230 comprises a built-in regulator 237. Referring to Figures 3 and 7, the regulator housing 230 may define a dimple 236 for actuating the regulator housing 230 for engagement with a gas cylinder. The regulator housing 230 may also comprise an on/off lever housing 231 for opening/closing the regulator 237. The regulator housing 230 may be engaged with the valve 330 on the gas cylinder 300 by pressing the dimple 236 on the regulator housing 230. By pressing the dimple 236, the regulator housing 230 is depressed thereby engaging the regulator 237 with the valve 330 on the gas cylinder 300. Typically in use, the regulator housing 230 may be configured to project vertically downwardly to engage with the gas cylinder 300. The regulator housing 230 is dimensioned to engage with the valve 330 on the gas cylinder 300. The engagement is effected by a spring-loaded arrangement. Referring to Figure 7, the regulator housing 230 comprises spring-loaded housing mounts 233 which are slideably guided in the regulator housing 230, wherein the housing mounts 233 are spring-biased outwardly. When the regulator housing 230 is depressed inwardly in a first direction 230a, the spring loaded housing mounts 233 are configured to be engaged with a bottom portion of the regulator housing 230, thereby positively engaging the regulator housing 230 with the valve 330 on the gas cylinder 300. When the regulator housing 230 is engaged with the valve 330 on the gas cylinder 300, a user may open the regulator 237 by actuating a lever 231a of the on/off lever housing 231. Referring to Figures 1 and 6, the lever 231a may be actuated in a second direction 230b in the regulator housing 230 to open/close the regulator 237. The second direction 230b may correspond to a lateral movement with respect to the top portion 215 of the main housing unit 210. The regulator housing 230 is also configured to be disengaged from the gas cylinder 300. By actuating the on/off lever housing 231 inwardly in the first direction 230a, the spring-loaded housing mounts 233 are configured to be disengaged from the bottom portion of the housing 230, thereby releasing the regulator housing 230 from the valve 330. The second direction 230b may be substantially perpendicular to the first direction 230a. As the regulator housing 230 may be configured to project in a substantially vertical direction in use to engage/disengage with the gas cylinder 300, the first direction 230a will typically be in the vertical plane. When a user wishes to replace the gas cylinder 300, the regulator housing 230 in an engaged state is configured to be disengaged from the gas cylinder 300. A user may disengage the regulator housing 230 from the valve 330 on the gas cylinder 300 by actuating the on/off lever housing 231 in the first direction 230a. It will be appreciated that the on/off lever housing 231 fulfils a dual functionality of opening/closing the regulator 237 and disengaging the regulator housing 230 from the gas cylinder 300. The lever 231a of the on/off lever housing 231 may be actuated in the second direction 230b to open/close the regulator 237. The on/off lever housing 231 may be actuated in the first direction 230a to disengage the regulator housing 230 from the gas cylinder 300. Although not shown, the engagement of the regulator housing 230 with the valve 330 of the gas cylinder 300 may also be effected by securing brackets which are configured to grip to the gas cylinder 300. The securing brackets may also be configured for disengagement from the gas cylinder 300. It will be understood that such engagement of the regulator housing 230 with the gas cylinder 300 by securing brackets functions to align the regulator housing 230 with the valve 330 of the gas cylinder 300 independently of the base unit 220. The securing brackets may be located in the housing, for example, on an underside of the housing 200. Specifically, the securing brackets may be disposed on an underside of the main housing unit 210.

A nozzle 238 may be provided at a side of the regulator 237 for connecting to the at least one gas burner 260. Such connection may effected by way of a flexible hose for example. It will be appreciated that the above engagement/disengagement mechanism provides a configuration whereby a user can clearly whether the regulator is engaged with the cylinder valve. For example, Figures 1 and 4 clearly show the regulator housing 230 in a depressed state, which indicates that the regulator is engaged with the cylinder valve. Similarly, the user can appreciate from the configuration illustrated in Figures 3 and 5 showing the regulator housing 230 proud of the main housing unit 210 that the regulator is not engaged with the cylinder valve.

Referring to Figures 3 and 4, the housing 200 may also comprise an ignition and heat setting unit 240. The ignition and heat setting unit 240 may be provided on the top portion 215 of the main housing unit 210. Thus, the ignition and heat setting unit 240 is also accessible for the user on an outer surface of the housing 200. Both the regulator housing 230 and the ignition/heat setting unit 240 may be provided on the top portion 215 of the main housing unit 210 to make cylinder connection and operation easier for the user. More specifically, similar to the regulator housing 230, the top portion 215 may define an area for receiving the ignition and heat setting unit 240. The ignition and heat setting unit 240 may be configured to have a dual functionality of igniting the at least one burner 260 and to control the heat setting of the at least one burner 260. The at least one burner 260 may incorporate a pilot light and ignition may be effected using a piezo-electric mechanism. The ignition and heat setting unit 240 may be rotated in order to control the heat setting. In this regard, the ignition and heat setting unit 240 may be in the form of a rotary dial as illustrated in Figures 3 and 4. As illustrated in Figures 3 and 4, the ignition and heat setting unit 240 may be provided to the side of the regulator housing 230 on the top portion 215 of the main housing unit 210. Manual rotation of the ignition and heat setting unit 240 may be used to effect control of the gas flow to the at least one burner 260.

The regulator 237 may be configured to directly couple to the at least one burner 260, corresponding fittings provided on the regulator 237 and burner 260 respectively to effect this coupling arrangement. It will be appreciated that this coupling arrangement is configured so that a fluid conduit is provided between the regulator 237 and the at least one gas burner 260 to allow gas to flow to the burner 260 on opening of the regulator 237 via the regulator housing 230. As mentioned above, a nozzle 238 may be provided at a side of the regulator 237 for connecting to the at least one gas burner 260. Such connection may effected by way of a flexible hose for example.

The housing for the portable gas heater of the present teaching as described above has a number of advantages. When the user first uses the heater or replaces an empty gas cylinder they can seat the cylinder on the base in position and lower the main housing unit over the cylinder. This minimises lifting of the cylinder. The base unit is located in a lower region of the housing, the base unit being configured to receive and seat an upstanding bottle of gas. The main housing unit, which may comprise an integrated heat engine, can be fitted over the gas cylinder instead of the traditional way of loading the cylinder into the housing. There are several advantages of putting the housing over the cylinder instead of the cylinder into the housing. As a gas cylinder is considerably heavier than the main housing unit, it is easier for the user to load gas cylinders onto only the base. Also, an integrated main housing unit which includes the heat engine as described above means that the number of components and moving parts, for example doors and hinges, is reduced. This reduces manufacturing costs, and allows for a compact design which means less material and lower shipping and maintenance costs. Further by providing such a base unit on which the gas cylinder is seated, the gas cylinder is less likely to fall should the heater be moved.

The housing also has an integrated regulator housing including a built-in regulator. The housing is configured to integrate with the shroud of the cylinder. The regulator housing is configured to be aligned with the cylinder valve. The user can couple the integrated regulator housing in the housing with the valve on the cylinder and actuate an integrated on/off lever in the regulator housing to open the built-in regulator. Because the regulator is incorporated into the housing and the regulator housing is provided on an outer surface of the housing accessible to the user, connection to the cylinder is ergonomic and tactile. Both the regulator housing and an ignition/heat setting unit may be provided on an on an outer surface of the housing to make cylinder connection and operation easier for the user. It will be appreciated that the engagement/disengagement mechanism provides a configuration whereby a user can clearly whether the regulator is engaged with the cylinder valve by observing the position of the regulator housing. A heat engine incorporating the regulator housing, at least one gas burner and the ignition/heat setting unit can be integrated into the housing.

The words comprises/comprising when used in this specification are to specify the presence of stated features, integers, steps or components but does not preclude the presence or addition of one or more other features, integers , steps, components or groups thereof.

## Claims

1. A portable gas cylinder housing (200), the housing (200) comprising a built-in regulator (237) being moveable so as to effect a positive operable coupling of the regulator (237) with a gas cylinder (300) received within the gas cylinder housing (200), and **characterised in that** the cylinder housing (200) comprises a guide for orientating and receiving the gas cylinder (300) within the gas cylinder housing (200), the guide being configured to cooperate with a valve (330) on the received gas cylinder (300) to locate the valve (330) relative to the built-in regulator (237) and the built-in regulator is provided in an integrated regulator housing (230), the regulator housing (230) being accessible to a user through an outer surface of the cylinder housing (200), the regulator housing (230) being spring-mounted and moveable relative to the cylinder housing (200), a movement of the regulator housing (230) effecting a corresponding movement of the regulator (237) into contact with the received gas cylinder (300); and the regulator housing (230) comprising spring-loaded housing mounts (233) which are slideably guided in the regulator housing (230), wherein the housing mounts (233) are spring-biased outwardly.

2. The housing (200) of claim 1, wherein the housing (200) defines an area in a top portion (215) of the housing (200) for receiving the regulator housing (230).

3. The housing (200) of any preceding claim, wherein the housing (200) defines a recess in an inner surface of the top portion (215) of the housing (200), the recess configured for receiving a shroud (350) of the gas cylinder (300).

4. The housing (200) of any preceding claim, wherein the regulator housing (230) is configured for engagement and disengagement with a valve (330) on the gas cylinder (300), the regulator housing (230) being configured to positively engage with the valve (330) of the cylinder (300) by actuating the regulator housing (230) in a first direction (230a).

5. The housing (200) of any preceding claim, wherein the regulator housing (230) is moveable in a first direction (230a) and comprises an integrated on/off lever (231a) for opening/closing the regulator (237) by actuating the on/off lever (231a) in a second direction (230b).

6. The housing (200) of any preceding claim comprising one or more securing brackets in the housing for gripping onto a received gas cylinder.

7. The housing (200) of any preceding claim, wherein the housing (200) comprises an integrated heat engine comprising:
at least one gas burner (260),
the regulator housing (230), and
an ignition and heat setting unit (240).

8. The housing (200) of any preceding claim, further comprising a base unit (220) configured for receiving a gas cylinder (300), wherein the base unit (220) is configured to locate the gas cylinder (300) relative to the regulator housing (230) such that on receipt of the gas cylinder (300) within the housing (200), the cylinder (300) is aligned with the regulator housing (230).

9. A portable gas heater comprising the housing (200) of any preceding claim and a gas cylinder (300).

10. A portable gas barbecue comprising the housing (200) of any one of claims 1 to 8 and a gas cylinder (300).

## Patentansprüche

1. Gehäuse für einen tragbaren Gaszylinder (200), wobei das Gehäuse (200) eine eingebaute Reguliereinrichtung (237) umfasst, die derart bewegt werden kann, dass eine formschlüssige bedienbare Kopplung der Reguliereinrichtung (237) mit einem Gaszylinder (300) bewirkt wird, der in dem Gaszylindergehäuse (200) aufgenommen wurde, und **dadurch gekennzeichnet, dass** das Zylindergehäuse (200) eine Führung zum Ausrichten und Aufnehmen des Gaszylinders (300) in dem Gaszylindergehäuse (200) umfasst, wobei die Führung dazu ausgelegt ist, mit einem Ventil (30) an dem aufgenommenen Gaszylinder (300) zusammenzuwirken, um das Ventil (330) bezogen auf die eingebaute Reguliereinrichtung (237) anzuordnen und die eingebaute Reguliereinrichtung in einem integrierten Reguliereinrichtungsgehäuse (230) vorgesehen ist, wobei das Reguliereinrichtungsgehäuse (230) für einen Nutzer über eine Außenfläche des Zylindergehäuses (200) zugänglich ist, wobei das Reguliereinrichtungsgehäuse (230) federnd gelagert ist und bezogen auf das Zylindergehäuse (200) bewegbar ist, wobei eine Bewegung des Reguliereinrichtungsgehäuses (230) eine entsprechende Bewegung der Reguliereinrichtung (237) in Kontakt mit dem aufgenommenen Gaszylinder (300) bewirkt; und das Reguliereinrichtungsgehäuse (230) federnd gelagerte Gehäusehalterungen (233) umfasst, die verschiebbar in dem Reguliereinrichtungsgehäuse (230) geführt werden, wobei die Gehäusehalterungen (233) nach außen federvorgespannt sind.

2. Gehäuse (200) nach Anspruch 1, wobei das Gehäuse (200) einen Bereich in einem oberen Abschnitt (215) des Gehäuses (200) zum Aufnehmen des Reguliereinrichtungsgehäuses (230) definiert.

3. Gehäuse (200) nach einem vorhergehenden Anspruch, wobei das Gehäuse (200) eine Aussparung in einer Innenfläche des oberen Abschnitts (215) des Gehäuses (200) definiert, wobei die Aussparung zum Aufnehmen einer Abdeckung (350) des Gaszylinders (300) ausgelegt ist.

4. Gehäuse (200) nach einem vorhergehenden Anspruch, wobei das Reguliereinrichtungsgehäuse (230) zum Ein- und Ausrücken mit einem Ventil (330) an dem Gaszylinder (300) ausgelegt ist, wobei das Reguliereinrichtungsgehäuse (230) dazu ausgelegt ist, durch Betätigen des Reguliereinrichtungsgehäuses (230) in eine erste Richtung (230a) formschlüssig in das Ventil (330) des Zylinders (300) einzurücken.

5. Gehäuse (200) nach einem vorhergehenden Anspruch, wobei das Reguliereinrichtungsgehäuse (230) in eine erste Richtung (230a) bewegbar ist und einen integrierten Ein/Aus-Hebel (231a) zum Öffnen/Schließen der Reguliereinrichtung (237) durch Betätigen des Ein/Aus-Hebels (231a) in eine zweite Richtung (230b) umfasst.

6. Gehäuse (200) nach einem vorhergehenden Anspruch, umfassend einen oder mehrere Befestigungsbügel in dem Gehäuse zum Greifen eines aufgenommenen Gaszylinders.

7. Gehäuse (200) nach einem vorhergehenden Anspruch, wobei das Gehäuse (200) eine integrierte Wärmekraftmaschine umfasst, umfassend:
mindestens einen Gasbrenner (260),
das Reguliereinrichtungsgehäuse (230), und
eine Zündungs- und Wärmeeinstelleinheit (240).

8. Gehäuse (200) nach einem vorhergehenden Anspruch, ferner umfassend eine Basiseinheit (220), die zum Aufnehmen eines Gaszylinders (300) ausgelegt ist, wobei die Basiseinheit (220) dazu ausgelegt ist, den Gaszylinder (300) bezogen auf das Reguliereinrichtungsgehäuse (230) anzuordnen, sodass bei Aufnahme des Gaszylinders (300) in dem Gehäuse (200) der Zylinder (300) auf das Reguliereinrichtungsgehäuse (230) ausgerichtet wird.

9. Tragbarer Gasheizer, umfassend das Gehäuse (200) nach einem vorhergehenden Anspruch und einen Gaszylinder (300).

10. Tragbarer Gasgrill, umfassend das Gehäuse (200) nach einem der Ansprüche 1 bis 8 und einen Gaszylinder (300).

## Revendications

1. Boîtier pour bouteille de gaz portable (200), le boîtier (200) comprenant un régulateur intégré (237) déplaçable de façon à effectuer un couplage fonctionnel positif du régulateur (237) avec une bouteille de gaz (300) reçue à l'intérieur du boîtier pour bouteille de gaz (200), et **caractérisé par le fait que** le boîtier pour bouteille (200) comprend un guide pour orienter et recevoir la bouteille de gaz (300) à l'intérieur du boîtier pour bouteille de gaz (200), le guide étant configuré pour coopérer avec une valve (330) sur la bouteille de gaz (300) reçue pour positionner la valve (330) par rapport au régulateur intégré (237) et le régulateur intégré étant prévu dans un boîtier de régulateur incorporé (230), le boîtier de régulateur (230) étant accessible à un utilisateur à travers une surface externe du boîtier pour bouteille (200), le boîtier de régulateur (230) étant monté sur ressort et déplaçable par rapport au boîtier pour bouteille (200), un mouvement du boîtier de régulateur (230) entraînant un mouvement correspondant du régulateur (237) en contact avec la bouteille de gaz reçue (300) ; et le boîtier de régulateur (230) comprenant des supports de boîtier chargés par ressort (233) qui sont guidés de manière coulissante dans le boîtier de régulateur (230), les supports de boîtier (233) étant sollicités par ressort vers l'extérieur.

2. Boîtier (200) selon la revendication 1, dans lequel le boîtier (200) définit une région dans une partie supérieure (215) du boîtier (200) pour recevoir le boîtier de régulateur (230).

3. Boîtier (200) selon l'une quelconque des revendications précédentes, dans lequel le boîtier (200) définit un évidement dans une surface interne de la partie supérieure (215) du boîtier (200), l'évidement étant configuré pour recevoir un chapeau ouvert (350) de la bouteille de gaz (300).

4. Boîtier (200) selon l'une quelconque des revendications précédentes, dans lequel le boîtier de régulateur (230) est configuré pour un engagement et un désengagement d'une valve (330) sur la bouteille de gaz (300), le boîtier de régulateur (230) étant configuré pour s'engager de manière positive avec la valve (330) de la bouteille (300) par actionnement du boîtier de régulateur (230) dans une première direction (230a).

5. Boîtier (200) selon l'une quelconque des revendications précédentes, dans lequel le boîtier de régulateur (230) est déplaçable dans une première direction (230a) et comprend un levier marche/arrêt incorporé (231a) pour ouvrir/fermer le régulateur (237) par actionnement du levier marche/arrêt (231a) dans une seconde direction (230b).

6. Boîtier (200) selon l'une quelconque des revendications précédentes, comprenant un ou plusieurs supports de fixation dans le boîtier pour une saisie sur une bouteille de gaz reçue.

7. Boîtier (200) selon l'une quelconque des revendications précédentes, dans lequel le boîtier (200) comprend un moteur thermique incorporé comprenant :
au moins un brûleur à gaz (260),
le boîtier de régulateur (230), et
une unité d'allumage et de réglage de chaleur (240).

8. Boîtier (200) selon l'une quelconque des revendications précédentes, comprenant en outre une unité de base (220) configurée pour recevoir une bouteille de gaz (300), l'unité de base (220) étant configurée pour positionner la bouteille de gaz (300) par rapport au boîtier de régulateur (230) de telle sorte qu'à réception de la bouteille de gaz (300) à l'intérieur du boîtier (200), la bouteille (300) est alignée avec le boîtier de régulateur (230).

9. Dispositif portable de chauffage au gaz comprenant le boîtier (200) selon l'une quelconque des revendications précédentes et une bouteille de gaz (300).

10. Barbecue à gaz portable comprenant le boîtier (200) selon l'une quelconque des revendications 1 à 8 et une bouteille de gaz (300).
